# EUROPEAN PATENT SPECIFICATION

(11) **EP 4 484 232 B1**
(45) Date of publication and mention of the grant of the patent: **29.04.2026**
(21) Application number: 24167015.7
(22) Date of filing: 27.03.2024
(51) Int. Cl.: B60T 11/232, B60T 13/68, B60T 15/02, B60T 15/32, B60T 17/04, B60T 17/22

(54) **BRAKING DEVICE FOR VEHICLES**
BREMSANLAGE FÜR FAHRZEUGE
DISPOSITIF DE FREINAGE POUR VÉHICULES

(30) Priority: 17.04.2023 IT 202300007437
(43) Date of publication of application: 01.01.2025
(73) Proprietor: SAFIM S.r.l., 41123 Modena (MO) (IT)
(72) Inventor: LUPPI, Marco, 41123 Modena (MO) (IT); PARMEGGIANI, Matteo, 41123 Modena (MO) (IT)
(74) Representative: Zoli, Filippo

(56) References cited:
- KR-A- 20060 063 088
- US-A- 4 721 343
- US-B2- 10 814 850

## Description

### Technical Field

The present invention relates to a braking device for vehicles, particularly to a secondary braking valve.

### Background Art

Braking circuits generally used in vehicles and particularly in tractors and operating machinery comprise a main braking device (typically of the master cylinder type) connected to the brake pedal and adapted to send pressurized oil to the braking circuit as a result of the pressure exerted on the pedal itself, so as to brake the vehicle.

More specifically, a braking pump operates as main braking device and isolates the oil within a collection tank and then transfers it, as a result of the brake pedal actuation, to the braking circuit.

When braking is completed, that is, when the brake pedal is released, the oil is recirculated into the main braking device and, therefore, set back in communication with the collection tank.

Braking circuits of known type may also have a secondary braking valve, adapted to operate in parallel with the main braking device in order to assist the braking action controlled by the latter.

The secondary braking valve is then also connected to the vehicle braking circuit and can be controlled electronically.

As known to the technician in the field, both the main braking device and the secondary braking valve are provided with a relevant braking piston housed sliding within a relevant braking chamber, where the stroke of the braking piston determines the amount of oil sent to the braking circuit and, consequently, the intensity and effectiveness of the braking action.

These braking circuits of known type do however have some drawbacks.

In particular, it may happen that air bubbles are contained in the oil sent to the braking circuit which bubbles, as they enter the main braking device and/or the secondary braking valve, reduce the useful displacement thereof, consequently causing less effective braking or even, in borderline cases, completely nullifying the braking action.

A braking device of the known type is disclosed by US10814850B2.

### Description of the Invention

The main aim of the present invention is to provide a braking device for vehicles, and in particular a secondary braking valve, which makes it possible to eliminate or at least reduce the risk that any air bubbles contained in the braking liquid may enter the relevant braking chamber, thus adversely affecting the effectiveness of the braking action.

Another object of the present invention is to provide a braking device for vehicles which allows the aforementioned drawbacks of the prior art to be overcome within the framework of a simple, rational, easy and effective to use as well as cost-effective solution.

The aforementioned objects are achieved by this braking device for vehicles according to claim 1.

### Brief Description of the Drawings

Other characteristics and advantages of the present invention will become more apparent from the description of a preferred, but not exclusive, embodiment of a braking device for vehicles, illustrated by way of an indicative, yet non-limiting example, in the accompanying tables of drawings in which:
Figure 1 is an axonometric view of a device according to the invention;
Figure 2 is a first side elevation view of the device in Figure 1;

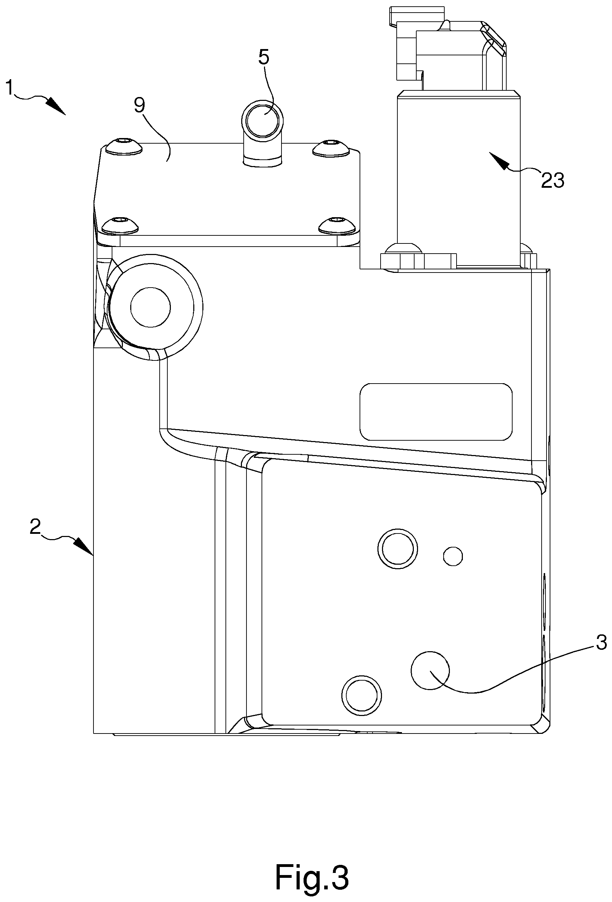

Figure 3 is a second side elevation view of the device in Figure 1;
Figures 4 through 8 are cross-sectional views along the track plane IV-IV of

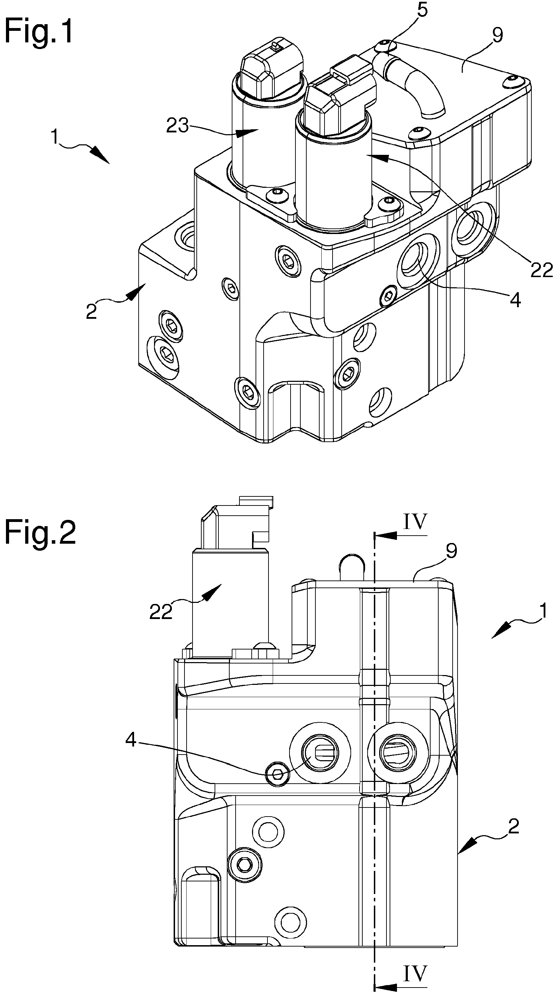

Figure 2 that identify five different operating conditions of the device in Figure 1;

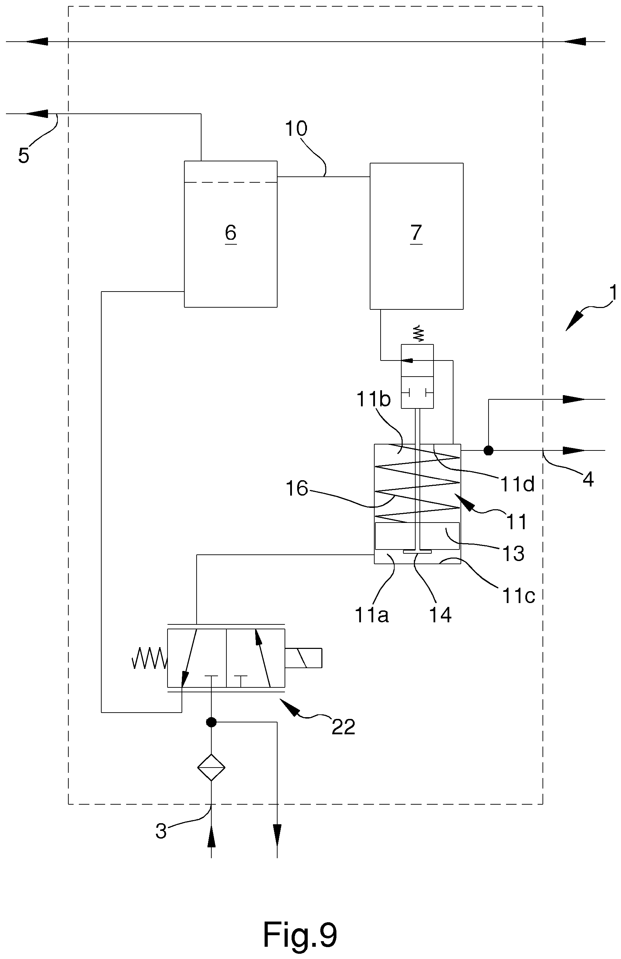

Figure 9 is a schematic representation of the hydraulic circuit of the device in Figure 1;

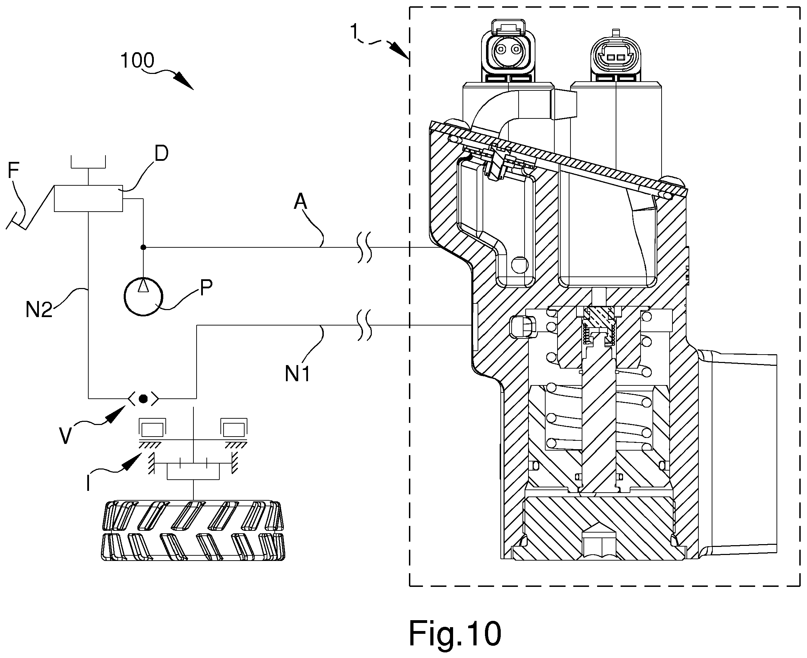

Figure 10 is a schematic representation of a braking circuit of a vehicle comprising the device in Figure 1.

### Embodiments of the Invention

With particular reference to these figures, reference numeral 1 globally denotes a braking device for vehicles, particularly a secondary braking valve.

Figure 10 shows a braking circuit 100 within which the braking device 1 is inserted. As can be seen from the figure, the circuit 100 comprises a main braking device D which can be connected to the brake pedal F of a vehicle and a hydraulic pump P connected to the braking device 1. The pump P can also be connected, as in the embodiment shown in Figure 10, to the main braking device D. More specifically, the braking circuit 100 comprises a feeding channel A adapted to set the pump P in communication with the braking device 1 and, possibly, with the main braking device D, a first braking channel N1 adapted to set the device 1 in communication with the braking circuit I and a second braking channel N2 adapted to set the main braking device D in communication with the braking circuit I. Between the first braking channel N1 and the second braking channel N2 there are valve means V, e.g. of the type of a so-called "shuttle valve", adapted to selectively set the braking circuit I in communication with that of either the first braking channel N1 or the second braking channel N2 having higher pressure.

According to the invention, the device 1 comprises a body 2 provided with at least one inlet port 3 of a pressurized working liquid, e.g., oil, with at least one outlet port 4 connectable to the braking circuit I of a vehicle, and with at least one draining port 5 connectable to a draining tank.

Specifically, the inlet port 3 is connectable to the pump P and the outlet port 4 is connectable to the second braking channel N2 of the circuit 100.

The device 1 then comprises a first tank 6 provided with an inlet spout 26 of the working liquid and open at the top to define a first upper port 6a, and a second tank 7 communicating with the first tank 6.

The first tank 6 and the second tank 7 are arranged side by side.

Preferably, the first tank 6 and the second tank 7 are defined within the body 2.

There is then a closing element 9, e.g. of the type of a lid, of at least the first upper port 6a.

Advantageously, the closing element 9 is arranged, in use, (where this definition means the position taken by the device 1 during its use), inclined with respect to the horizon.

In the particular, but not exclusive embodiment shown in the figures, the second tank 7 is also open at the top to define a second upper port 7a, and the closing element 9 is arranged raised above the upper ports 6a, 7a so as to define a connecting channel 10 between the first tank 6 and the second tank 7. In one alternative embodiment, not shown in the figures, the second tank 7 is closed at the top by the same body 2.

Advantageously, the draining port 5 is defined on the closing element 9 and is arranged facing the first upper port 6a.

Preferably, the closing element 9 is inclined from top to bottom proceeding from the first tank 6 towards the second tank 7. In other words, the height of the closing element 9 with respect to a horizontal reference plane turns out to be greater where the first tank 6 is located than that measured where the second tank 7 is located. This arrangement of the closing element 9 makes it easier to convey any air bubbles that may be present in the working liquid contained in the second tank 7 towards the top of the closing element 9 and, in particular, towards the draining port 5.

It follows, therefore, that the working liquid entering inside the first tank 6 through the inlet spout 26, and possibly containing the air bubbles, once the first tank itself is filled, flows out of the first upper port 6a, passing through the filtering element 8, and flows into the second tank 7. Any air bubbles in the working liquid that flows out of the first tank 6 remain adhered to the filtering element 8 where its upper face is located. Any air bubbles that are transferred into the second tank 7 collect where its upper portion is located, particularly at the free surface of the working liquid contained within it, and the inclination of the closing element 9 promotes the displacement thereof towards the draining port 5.

The device 1 also comprises at least one working chamber 11 provided with at least one connecting port 12 to the second tank 7 and within which at least one braking piston 13,14 is housed sealing in a sliding manner, which divides the working chamber 11 into at least one driving chamber 11a connectable to the inlet port 3 and a braking chamber 11b communicating with the outlet port 4 and with the connecting port 12.

Still according to the invention, the device 1 comprises at least one filtering element 8 located between the inlet spout 26 and the connecting port 12, which is adapted to allow the passage of the working liquid and to retain the air bubbles contained therein.

In the particular embodiment shown in the figures, the filtering element 8 is arranged facing the first upper port 6a. In this embodiment, the draining port 5 defined on the closing element 9 is arranged facing the filtering element 8.

In one alternative embodiment, not shown in the figures, the filtering element 8 is arranged within at least one of either the first tank 6 or the second tank 7.

Further embodiments cannot however be ruled out wherein the filtering element 8 is arranged both where the first port 6a is located and within at least one of the tanks 6 and 7.

More particularly, the filtering element 8 can be of the slab-shaped type (as in the embodiment shown in the figures), e.g. of the type of a wire mesh, or it can define a closed profile having, e.g., a cylindrical conformation.

The working chamber 11 has a bottom wall 11c and a top 11d opposite each other. The connecting port 12 is defined where the top 11d is located.

Preferably, the braking chamber 11b is obtained within the body 2 and is arranged, in use, below the second tank 7.

Advantageously, the volume of the second tank 7 is greater than the maximum volume of the braking chamber 11b. This ensures that the working liquid contained in the second tank 7 can never flow completely into the braking chamber 11b, thus preventing any air bubbles contained in the second tank itself, which collect at the free surface of the liquid contained within it, from being transferred into the braking chamber 11b.

At least one plug element 15 is housed inside the working chamber 11 and is connected to the braking piston 13,14 in a kinematic manner and adapted to open/close the connecting port 12. In other words, the displacement of the plug element 15 is affected by the movement of the braking piston 13,14.

In the preferred embodiment shown in the figures, the braking piston 13,14 comprises at least one tumbler element 13 and at least one driving element 14 inserted passing through the tumbler element itself and connected to the plug element 15 in a kinematic manner. The driving element 14 is inserted tightly in a sliding manner within the tumbler element 13.

The tumbler element 13 is movable by shifting within the working chamber 11 between a home position, wherein it rests against the bottom wall 11c of the working chamber itself, and at least one braking position, wherein it is raised with respect to the bottom wall 11c. It follows that the greater the distance of the tumbler element 13 from the bottom wall 11c, the greater the volume of the working liquid transferred towards the braking circuit I.

Appropriately, within the braking chamber 11b are housed first elastic means 16, which are adapted to push the tumbler element 13 towards the home position. In other words, the first elastic means 16 are adapted to counteract the displacement of the tumbler element 13 towards the braking position.

In more detail, the tumbler element 13 defines a housing seat 13a of the first elastic means 16 which have one end associated with the tumbler element itself and the opposite end operating on the top 11d of the braking chamber 11b. The first elastic means 16 are, e.g., of the type of a coil spring. As shown in the figures, the upper portion of the first elastic means 16 is fitted around a spring-guiding element 17 that rests against the top 11d of the working chamber 11. More specifically, the spring-guiding element 17 can be separate from the body 2 or, alternatively, made in a single piece therewith.

More particularly, the driving element 14 also faces the bottom wall 11c and moves locked together with the tumbler element 13 during a first stretch of its travel from the home position towards a braking position.

Preferably, the tumbler element 13 has at least a first abutment surface 18 adapted to interact with the driving element 14 during the displacement from a braking position towards the home position to drag the driving element itself towards the bottom wall 11c.

Appropriately, the driving element 14 comprises at least one stopping surface 19, defined e.g. by a Seeger ring, which is adapted to interact with the spring-guiding element 17 during its displacement away from the bottom wall 11c. As a result of this interaction, the stroke of the driving element 14 away from the bottom wall 11c is limited with respect to that of the tumbler element 13, so that the maximum load that the driving element itself can apply to the plug element 15 to which it is kinematically connected is reduced.

Advantageously, the second elastic means 20 are located between the driving element 14 and the plug element 15, which are adapted to push the plug element itself towards the connecting port 12 as a result of the displacement of the driving element 14 away from the bottom wall 11c. In other words, when the driving element 14 moves away from the bottom wall 11c as a result of the increase in pressure in the driving chamber 11a, the second elastic means 20 in turn push the plug element 15 towards the closing position of the connecting port 12.

Preferably, the equivalent pressure exerted by the first elastic means 16 on the tumbler element 13 is greater than that exerted by the second elastic means 20 on the plug element 15.

Appropriately, the driving element 14 has a second abutment surface 21 adapted to interact with the plug element 15 during its displacement towards the bottom wall 11c so as to drag it away from the connecting port 12.

Then, the device 1 comprises valve means 22 adapted to set the driving chamber 11a in communication with the inlet port 3 and/or with the first tank 6.

More particularly, the valve means 22 are movable between two extreme working positions where, in the first working position, the inlet port 3 is closed and the driving chamber 11a is set in communication with the inlet spout 26 while, in the second working position, the inlet port 3 is set in communication with the driving chamber 11a and the connection with the first tank 6 is closed.

The operation of this invention is as follows.

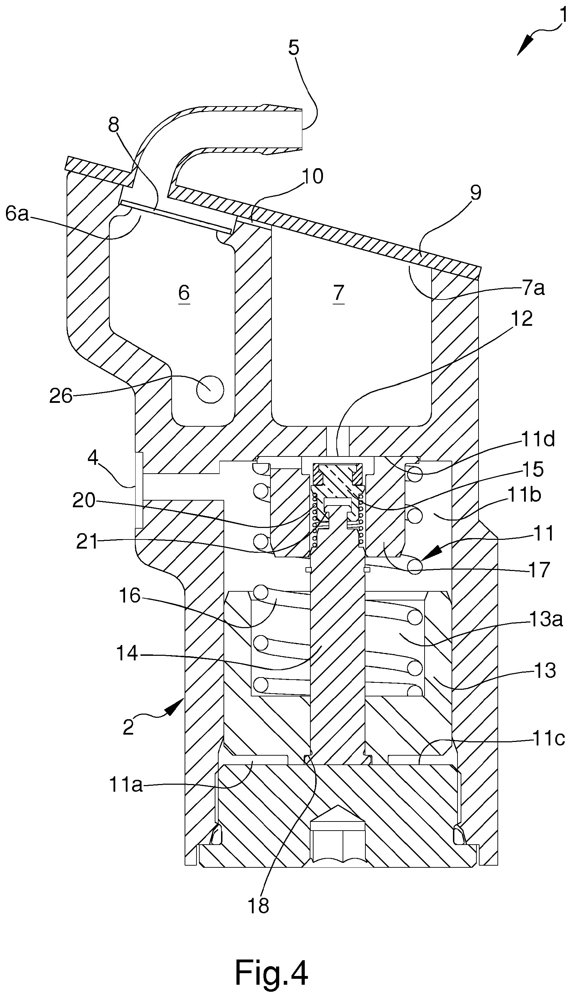

In the home condition, shown in Figure 4, the braking piston 13,14 is arranged resting against the bottom wall of the working chamber 11, the driving chamber 11a is set in communication with the first tank 6 through the valve means 22 and the braking chamber 11b is set in communication with the second tank 7 through the connecting port 12, which is opened by the plug element 15.

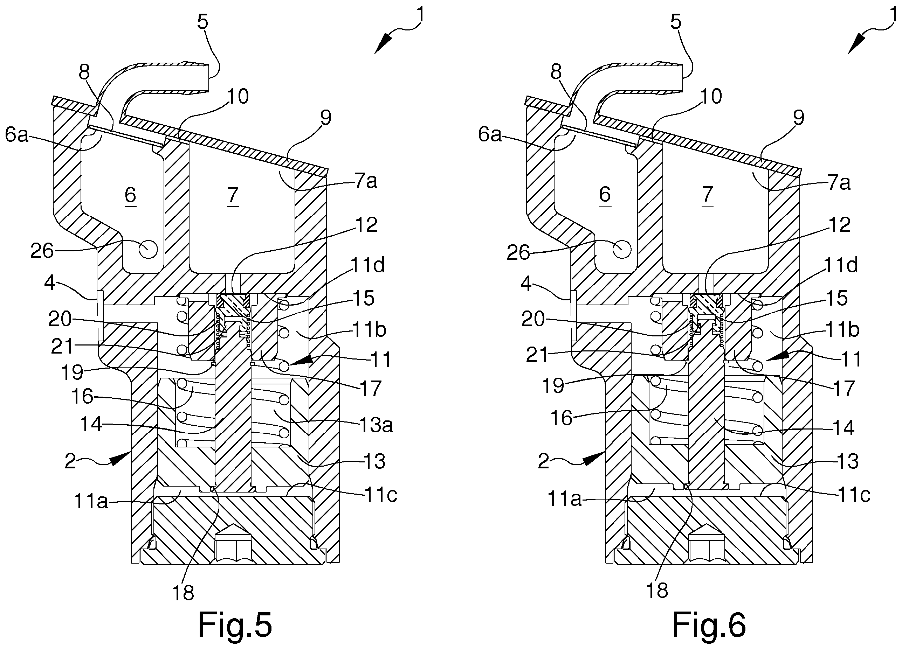

At the time when the valve means 22 are brought to the second working position, the driving chamber 11a is set under pressure as a result of the inlet of the working liquid coming from the inlet port 3. As a result of this pressurization, the braking piston 13,14 is raised with respect to the bottom wall 11c. More specifically, both the tumbler element 13 and the driving element 14 are raised with respect to the bottom wall 11c, where the tumbler element 13 begins to compress the first elastic means 16 and the driving element 14 exerts a pushing action on the plug element 15, by means of the second elastic means 20, causing the connecting port 12 to close. In this operating condition, shown in Figure 5, the braking chamber 11b is isolated from the second tank 7 and the first tank 6 is isolated from the driving chamber 11a.

As a result of the further increase in pressure within the driving chamber 11a, the braking piston 13,14 continues to rise as it moves close to the top 11d; in particular, the tumbler element 13 further compresses the first elastic means 16, causing the working liquid contained in the braking chamber 11b to be sent towards the braking circuit I through the outlet port 4, while the driving element 14 stops its stroke at the moment when the stopping surface 19 interacts with the tumbler element 13. This limits the maximum force that the driving element 14 is able to exert on the plug element 15. This operating condition is shown in Figure 6.

The progressive increase in pressure within the driving chamber 11a then causes the relevant movement of the tumbler element 13, which continues to move away from the bottom wall 11c further compressing the first elastic means 16, with respect to the driving element 14.

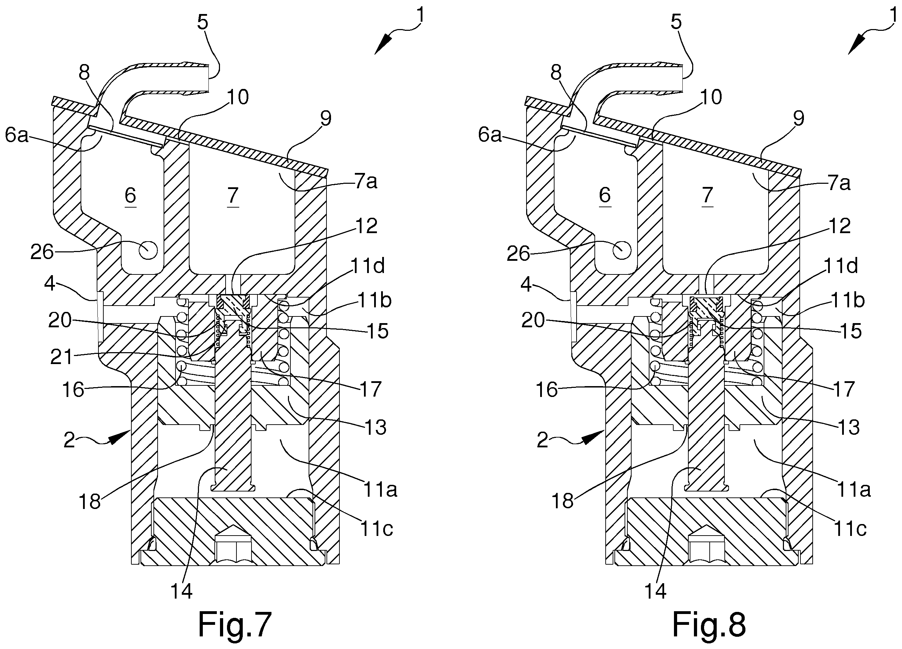

Thus, the maximum braking condition of the braking circuit I corresponds to the configuration in which the distance of the tumbler element 13 from the bottom wall 11c is maximum and, consequently, the volume of the braking chamber 11b is minimum. This operating condition is shown in Figure 7. Also in this operating condition, the plug element 15 is kept pressed against the top 11d of the working chamber 11 so as to close the connecting port 12, so that the braking chamber 11b is kept isolated from the second tank 7.

At the moment when the pressure within the driving chamber 11a decreases, the tumbler element 13, pushed by the first elastic means 16, returns towards the home position by drawing within the braking chamber 11b the pressurized liquid from the braking circuit I through the outlet port 4.

In the case where the output port 4 is isolated from the braking circuit, e.g. as a result of the increased braking pressure exerted by the main braking device D that causes the connection to the output port itself to be closed (by means of the shuttle valve V), the tumbler element 13 is prevented from drawing the working liquid from the braking circuit itself, so it is unable to go down towards the bottom wall 11c as a result of the pressure difference at its ends.

In this operating configuration, shown in Figure 8, the force exerted by the first elastic means 16 on the tumbler element 13 is greater than that exerted, in the opposite direction, by the second elastic means 20 on the plug element 15. It follows, therefore, that the negative pressure defined within the braking chamber 11b as a result of the force exerted by the first elastic means generates a greater force on the plug element 15 than that exerted thereon by the second elastic means 20, thus causing them to move away from the top 11d and the consequent opening of the connecting port 12. In this way, the working liquid contained in the second tank 7 flows within the braking chamber 11b, thus allowing the complete return of the braking piston 13,14 towards the home position. As described above, since the volume of the second tank 7 is greater than the maximum volume of the braking chamber 11b, the working liquid entering the latter is free of air bubbles, which, collecting at its free surface, remain within the second tank 7.

As a result of the displacement of the braking piston 13,14 moving close to the bottom wall 11c, the working liquid contained within the driving chamber 11a is pushed into the first tank 6 through the valve means 22, which are arranged in the first working position.

It has in practice been ascertained that the described invention achieves the intended objects, and in particular, the fact is emphasized that the braking device covered by the present invention makes it possible to minimize the risk that any air bubbles contained in the working liquid may enter the inside of the braking chamber, thus limiting the displacement thereof.

In particular, the simultaneous presence of the two working liquid collection tanks communicating with each other, of the filtering element arranged on top of the first collection tank, of the inclined closing element and of the draining port arranged facing the filtering element, allows for easy and effective de-bubbling of the air possibly contained in the working liquid.

Again, the sizing of the second tank and of the braking chamber below it, where the latter has a maximum volume less than that of the second tank itself, makes it possible to prevent any air bubbles left within the second tank from flowing into the braking chamber itself as a result of the opening of the connecting port located between them.

## Claims

1. Braking device comprising:
- a body (2) provided with at least one inlet port (3) of a pressurized working liquid, with at least one outlet port (4) connectable to the braking circuit (I) of a vehicle, and with at least one draining port (5) connectable to a draining tank;
said body (2) further comprising:
- a first tank (6) provided with an inlet spout (26) of the working liquid and open at the top to define a first upper port (6a) and a second tank (7), and
- at least one working chamber (11) provided with at least one connecting port (12) to said second tank (7) and within which at least one braking piston (13,14) is housed in a sealed and sliding manner;
**characterized in that** said second tank (7) is communicating with said first tank (6),
**in that** said braking device (1) comprises a closing element (9) of at least said first upper port (6a);
**in that** said braking piston (13,14) divides said working chamber (11) into at least one driving chamber (11a) connectable to said inlet port (3) and a braking chamber (11b) communicating with said outlet port (4) and with said connecting port (12), at least one plug element (15) being provided and connected to said braking piston (13,14) in a kinematic manner and adapted to open/close said connecting port (12);
and **in that** said braking device (1) comprises at least one filtering element (8) located between said inlet spout (26) and said connecting port (12) and adapted to allow the passage of the working liquid and to retain the air bubbles contained therein.

2. Device (1) according to claim 1, **characterized by** the fact that said draining port (5) is defined on said closing element (9) and is arranged facing said first upper port (6a).

3. Device (1) according to claim 1 or 2, **characterized by** the fact that said filtering element (8) is arranged where said first upper port (6a) is located.

4. Device (1) according to one or more of the preceding claims, **characterized by** the fact that said filtering element (8) is arranged within said first tank (6) and defines a closed profile.

5. Device (1) according to one or more of the preceding claims, **characterized by** the fact that said filtering element (8) is arranged within said second tank (7).

6. Device (1) according to one or more of the preceding claims, **characterized by** the fact that said closing element (9) is arranged, in use, inclined with respect to the horizon.

7. Device (1) according to one or more of the preceding claims, **characterized by** the fact that said closing element (9) is oriented from top to bottom proceeding from said first tank (6) towards said second tank (7).

8. Device (1) according to one or more of the preceding claims, **characterized by** the fact that the maximum volume of said braking chamber (11b) is less than the volume of said second tank (7).

9. Device (1) according to one or more of the preceding claims, **characterized by** the fact that said braking piston (13,14) comprises at least one tumbler element (13) and one driving element (14) inserted passing through said tumbler element (13) and connected to said plug element (15) in a kinematic manner.

10. Device (1) according to claim 9, **characterized by** the fact that said tumbler element (13) is movable by shifting within said working chamber (11) between a home position, wherein it rests against the bottom wall (11c) of the working chamber itself, and at least a braking position, wherein it is raised with respect to said bottom wall (11c), first elastic means (16) being provided adapted to push said tumbler element (13) towards the home position.

11. Device (1) according to claim 10, **characterized by** the fact that said driving element (14) also faces said bottom wall (11c) and moves locked together with said tumbler element (13) during a first stretch of its travel from the home position towards a braking position.

12. Device (1) according to one or more of claims 9 to 11, **characterized by** the fact that said tumbler element (13) comprises at least a first abutment surface (18) adapted to interact with said driving element (14) during the displacement from a braking position towards the home position to drag the driving element itself towards said bottom wall (11c).

13. Device (1) according to one or more of claims 9 to 12, **characterized by** the fact that it comprises at least one spring-guiding element (17) arranged in said braking chamber (11b) and around which said first elastic means (16) are fitted and by the fact that said driving element (14) comprises at least one stopping surface (19) adapted to interact with said spring-guiding element (17) during its displacement away from said bottom wall.

14. Device (1) according to one or more of claims 9 to 13, **characterized by** the fact that it comprises second elastic means (20) located between said driving element (14) and said plug element (15) and adapted to push the latter towards said connecting port (12) as a result of the displacement of said driving element (14) away from said bottom wall (11c).

15. Device (1) according to claim 14, **characterized by** the fact that the equivalent pressure exerted by said first elastic means (16) on said tumbler element (13) is greater than that exerted by said second elastic means (20) on said plug element (15).

## Patentansprüche

1. Bremsvorrichtung, umfassend:
- einen Körper (2), der mit mindestens einer Einlassöffnung (3) für eine unter Druck stehende Arbeitsflüssigkeit, mit mindestens einer Auslassöffnung (4), die mit dem Bremskreis (I) eines Fahrzeugs verbunden werden kann, und mit mindestens einer Ablauföffnung (5) versehen ist, die mit einem Ablaufbehälter verbunden werden kann; wobei der Körper (2) ferner umfasst:
- einen ersten Behälter (6), der mit einem Einlassstutzen (26) für die Arbeitsflüssigkeit versehen und oben offen ist, um eine erste obere Öffnung (6a) zu definieren, und einen zweiten Behälter (7), und
- mindestens eine Arbeitskammer (11), die mit mindestens einer Verbindungsöffnung (12) zu dem zweiten Behälter (7) versehen ist und in der mindestens ein Bremskolben (13, 14) abgedichtet und verschiebbar untergebracht ist;
**dadurch gekennzeichnet, dass** der zweite Behälter (7) mit dem ersten Behälter (6) in Verbindung steht,
dass die Bremsvorrichtung (1) ein Verschlusselement (9) für mindestens die erste obere Öffnung (6a) umfasst;
dass der Bremskolben (13, 14) die Arbeitskammer (11) in mindestens eine Antriebskammer (11a), die mit der Einlassöffnung (3) verbunden werden kann, und eine Bremskammer (11b), die mit der Auslassöffnung (4) und mit der Verbindungsöffnung (12) in Verbindung steht, unterteilt, wobei mindestens ein Stopfenelement (15) vorgesehen und kinematisch mit dem Bremskolben (13, 14) verbunden ist und dazu ausgebildet ist, die Verbindungsöffnung (12) zu öffnen/zu schließen;
und dass die Bremsvorrichtung (1) mindestens ein Filterelement (8) umfasst, das sich zwischen dem Einlassstutzen (26) und der Verbindungsöffnung (12) befindet und dazu ausgebildet ist, den Durchgang der Arbeitsflüssigkeit zu ermöglichen und die darin enthaltenen Luftblasen zurückzuhalten.

2. Vorrichtung (1) nach Anspruch 1, **dadurch gekennzeichnet, dass** die Ablauföffnung (5) an dem Verschlusselement (9) definiert ist und der ersten oberen Anschlussöffnung (6a) zugewandt angeordnet ist.

3. Vorrichtung (1) nach Anspruch 1 oder 2, **dadurch gekennzeichnet, dass** das Filterelement (8) dort angeordnet ist, wo sich die erste obere Öffnung (6a) befindet.

4. Vorrichtung (1) nach einem oder mehreren der vorhergehenden Ansprüche, **dadurch gekennzeichnet, dass** das Filterelement (8) innerhalb des ersten Behälters (6) angeordnet ist und ein geschlossenes Profil definiert.

5. Vorrichtung (1) nach einem oder mehreren der vorhergehenden Ansprüche, **dadurch gekennzeichnet, dass** das Filterelement (8) innerhalb des zweiten Behälters (7) angeordnet ist.

6. Vorrichtung (1) nach einem oder mehreren der vorhergehenden Ansprüche, **dadurch gekennzeichnet, dass** das Verschlusselement (9) im Gebrauch in Bezug auf den Horizont geneigt angeordnet ist.

7. Vorrichtung (1) nach einem oder mehreren der vorhergehenden Ansprüche, **dadurch gekennzeichnet, dass** das Verschlusselement (9) von oben nach unten, ausgehend von dem ersten Behälter (6) zu dem zweiten Behälter (7), ausgerichtet ist.

8. Vorrichtung (1) nach einem oder mehreren der vorhergehenden Ansprüche, **dadurch gekennzeichnet, dass** das maximale Volumen der Bremskammer (11b) kleiner ist als das Volumen des zweiten Behälters (7).

9. Vorrichtung (1) nach einem oder mehreren der vorhergehenden Ansprüche, **dadurch gekennzeichnet, daß** der Bremskolben (13, 14) mindestens ein Taumelelement (13) und ein Antriebselement (14) aufweist, das durch das Taumelelement (13) hindurchgeführt und mit dem Stopfenelement (15) kinematisch verbunden ist.

10. Vorrichtung (1) nach Anspruch 9, **dadurch gekennzeichnet, dass** das Taumelelement (13) durch Verschieben innerhalb der Arbeitskammer (11) zwischen einer Grundstellung, in der es an der Bodenwand (11c) der Arbeitskammer selbst anliegt, und mindestens einer Bremsstellung, in der es in Bezug auf die Bodenwand (11c) angehoben ist, beweglich ist, wobei erste elastische Mittel (16) vorgesehen sind, die dazu ausgebildet sind, das Taumelelement (13) in Richtung der Grundstellung zu drücken.

11. Vorrichtung (1) nach Anspruch 10, **dadurch gekennzeichnet, dass** das Antriebselement (14) ebenfalls der Bodenwand (11c) zugewandt ist und sich während eines ersten Abschnitts seiner Bewegung von der Ausgangsposition zu einer Bremsposition mit dem Taumelelement (13) zusammen verriegelt bewegt.

12. Vorrichtung (1) nach einem oder mehreren der Ansprüche 9 bis 11, **dadurch gekennzeichnet, dass** das Taumelelement (13) mindestens eine erste Anschlagfläche (18) aufweist, die geeignet ist, mit dem Antriebselement (14) während der Verschiebung von einer Bremsposition in Richtung der Ausgangsposition zusammenzuwirken, um das Antriebselement selbst in Richtung der Bodenwand (11c) zu ziehen.

13. Vorrichtung (1) nach einem oder mehreren der Ansprüche 9 bis 12, **dadurch gekennzeichnet, dass** sie mindestens ein Feder-Führungselement (17) umfasst, das in der Bremskammer (11b) angeordnet ist und um das herum die ersten elastischen Mittel (16) angebracht sind, und dass das Antriebselement (14) mindestens eine Sperrfläche (19) umfasst, die dazu ausgebildet ist, mit dem Feder-Führungselement (17) während seiner Verschiebung von der Bodenwand weg zusammenzuwirken.

14. Vorrichtung (1) nach einem oder mehreren der Ansprüche 9 bis 13, **dadurch gekennzeichnet, dass** sie zweite elastische Mittel (20) umfasst, die zwischen dem Antriebselement (14) und dem Stopfenelement (15) angeordnet und dazu ausgebildet sind, letzteres infolge der Verschiebung des Antriebselements (14) von der Bodenwand (11c) weg in Richtung der Verbindungsöffnung (12) zu drücken.

15. Vorrichtung (1) nach Anspruch 14, **dadurch gekennzeichnet, dass** der äquivalente Druck, der durch das erste elastische Mittel (16) auf das Taumelelement (13) ausgeübt wird, größer ist als der, der durch das zweite elastische Mittel (20) auf das Stopfenelement (15) ausgeübt wird.

## Revendications

1. - Dispositif de freinage comprenant :
- un corps (2) comportant au moins un orifice d'entrée (3) d'un liquide de travail sous pression, au moins un orifice de sortie (4) apte à être relié au circuit de freinage (I) d'un véhicule, et au moins un orifice de drainage (5) apte à être relié à un réservoir de drainage ;
ledit corps (2) comprenant en outre :
- un premier réservoir (6) comportant un bec d'entrée (26) du liquide de travail et ouvert à la partie supérieure pour définir un premier orifice supérieur (6a) et un second réservoir (7), et
- au moins une chambre de travail (11) comportant au moins un orifice de liaison (12) audit second réservoir (7) et à l'intérieur de laquelle est reçu au moins un piston de freinage (13, 14) d'une manière scellée et coulissante ;
**caractérisé par le fait que** ledit second réservoir (7) est en communication avec ledit premier réservoir (6),
**par le fait que** ledit dispositif de freinage (1) comprend un élément de fermeture (9) d'au moins ledit premier orifice supérieur (6a) ;
**par le fait que** ledit piston de freinage (13, 14) divise ladite chambre de travail (11) en au moins une chambre d'entraînement (11a) apte à être reliée audit orifice d'entrée (3) et une chambre de freinage (11b) communiquant avec ledit orifice de sortie (4) et avec ledit orifice de liaison (12), au moins un élément obturateur (15) étant disposé et relié audit piston de freinage (13, 14) d'une manière cinématique et apte à ouvrir/fermer ledit orifice de liaison (12) ; et
**par le fait que** ledit dispositif de freinage (1) comprend au moins un élément filtrant (8) situé entre ledit bec d'entrée (26) et ledit orifice de liaison (12) et apte à permettre le passage du liquide de travail et à retenir les bulles d'air contenues dans celui-ci.

2. - Dispositif (1) selon la revendication 1, **caractérisé par le fait que** ledit orifice de drainage (5) est défini sur ledit élément de fermeture (9) et est disposé en regard dudit premier orifice supérieur (6a).

3. - Dispositif (1) selon la revendication 1 ou 2, **caractérisé par le fait que** ledit élément filtrant (8) est disposé à l'emplacement dudit premier orifice supérieur (6a).

4. - Dispositif (1) selon l'une ou plusieurs des revendications précédentes, **caractérisé par le fait que** ledit élément filtrant (8) est disposé à l'intérieur dudit premier réservoir (6) et définit un profil fermé.

5. - Dispositif (1) selon l'une ou plusieurs des revendications précédentes, **caractérisé par le fait que** ledit élément filtrant (8) est disposé à l'intérieur dudit second réservoir (7).

6. - Dispositif (1) selon l'une ou plusieurs des revendications précédentes, **caractérisé par le fait que** ledit élément de fermeture (9) est disposé, en utilisation, incliné par rapport à l'horizon.

7. - Dispositif (1) selon l'une ou plusieurs des revendications précédentes, **caractérisé par le fait que** ledit élément de fermeture (9) est orienté de haut en bas en allant dudit premier réservoir (6) vers ledit second réservoir (7).

8. - Dispositif (1) selon l'une ou plusieurs des revendications précédentes, **caractérisé par le fait que** le volume maximal de ladite chambre de freinage (11b) est inférieur au volume dudit second réservoir (7).

9. - Dispositif (1) selon l'une ou plusieurs des revendications précédentes, **caractérisé par le fait que** ledit piston de freinage (13, 14) comprend au moins un élément gobelet (13) et un élément d'entraînement (14) introduit en traversant ledit élément gobelet (13) et relié d'une manière cinématique audit élément obturateur (15).

10. - Dispositif (1) selon la revendication 9, **caractérisé par le fait que** ledit élément gobelet (13) est mobile par déplacement à l'intérieur de ladite chambre de travail (11) entre une position de repos, dans laquelle il repose contre la paroi de fond (11c) de la chambre de travail elle-même, et au moins une position de freinage, dans laquelle il est soulevé par rapport à ladite paroi de fond (11c), des premiers moyens élastiques (16) étant disposés en étant aptes à pousser ledit élément gobelet (13) vers la position de repos.

11. - Dispositif (1) selon la revendication 10, **caractérisé par le fait que** ledit élément d'entraînement (14) fait également face à ladite paroi de fond (11c) et se déplace en étant verrouillé conjointement avec ledit élément gobelet (13) pendant un premier tronçon de sa course de la position de repos vers une position de freinage.

12. - Dispositif (1) selon l'une ou plusieurs des revendications 9 à 11, **caractérisé par le fait que** ledit élément gobelet (13) comprend au moins une première surface de butée (18) apte à interagir avec ledit élément d'entraînement (14) pendant le déplacement d'une position de freinage vers la position de repos pour traîner l'élément d'entraînement lui-même vers ladite paroi de fond (11c).

13. - Dispositif (1) selon l'une ou plusieurs des revendications 9 à 12, **caractérisé par le fait qu'**il comprend au moins un élément de guidage à ressort (17) disposé dans ladite chambre de freinage (11b) et autour duquel sont montés lesdits premiers moyens élastiques (16) et **par le fait que** ledit élément d'entraînement (14) comprend au moins une surface d'arrêt (19) apte à interagir avec ledit élément de guidage à ressort (17) lors de son déplacement à l'opposé de ladite paroi de fond.

14. - Dispositif (1) selon l'une ou plusieurs des revendications 9 à 13, **caractérisé par le fait qu'**il comprend des seconds moyens élastiques (20) situés entre ledit élément d'entraînement (14) et ledit élément obturateur (15) et aptes à pousser ce dernier vers ledit orifice de liaison (12) comme suite au déplacement dudit élément d'entraînement (14) à l'opposé de ladite paroi de fond (11c).

15. - Dispositif (1) selon la revendication 14, **caractérisé par le fait que** la pression équivalente exercée par lesdits premiers moyens élastiques (16) sur ledit élément gobelet (13) est supérieure à celle exercée par lesdits seconds moyens élastiques (20) sur ledit élément obturateur (15).
